# EUROPEAN PATENT APPLICATION

(11) **EP 3 376 769 A1**
(43) Date of publication of application: **19.09.2018**
(21) Application number: 18155932.9
(22) Date of filing: 09.02.2018
(51) Int. Cl.: H04N 21/2343, H04L 29/06, H04N 21/845, H04N 19/63

(54) **SYSTEMS AND METHODS FOR ADAPTIVE STREAMING USING JPEG 2000**

(30) Priority: 13.03.2017 US 201715456898
(71) Applicant: Honeywell International Inc., Morris Plains, NJ 07950 (US)
(72) Inventor: JAIN, Abhishek, Morris Plains, NJ New Jersey 07950 (US); GREWAL, Amit, Morris Plains, NJ New Jersey 07950 (US); MOHANTY, Kamini Kanta, Morris Plains, NJ New Jersey 07950 (US)
(74) Representative: Houghton, Mark Phillip

(57) **Abstract**

Systems and methods for adaptive streaming using JPEG 2000 are provided. Some systems can include a video source, a server device, and a client device in communication with the server device via a communication channel, wherein the server device receives a video data stream from a video source, wherein the server device converts the video data stream into a plurality of image layers, wherein the server device stores each of the plurality of image layers, wherein the client device transmits a request for the video data stream to the server device, and wherein the server device transmits at least one of the plurality of image layers to the client device based on a bandwidth available in the communication channel with the client device.

## Description

### FIELD

The present invention relates generally to systems and methods for streaming video. More particularly, the present invention relates to systems and methods for adaptive streaming using JPEG 2000.

### BACKGROUND

Known video surveillance streaming systems include a plurality of video sources, servers, and clients such that video data streams are transmitted among multiple nodes across the network. For example, video can be transmitted in a wired manner or wirelessly over network channels that include a LAN, a WAN, and the Internet.

Transmitting video over the Internet presents challenges when network bandwidth is low, fluctuates, or is otherwise unreliable. To address these challenges, some known systems transcode video into multiple bitrate data streams and host such multiple bitrate data streams to serve clients having different bandwidths. However, these types of systems require large streaming servers and considerable infrastructure on a cloud network. Such systems might work well when the same video data stream is transmitted to a large number of clients. However, due to the high cost associated with transcoding and with hosting and publishing multiple bitrates on different channels, such systems do not work well when the same video data stream is transmitted to only a handful of clients.

Notwithstanding the above, when a known video surveillance streaming system does not include a transcoding server and cannot host multiple bitrate data streams, only a single bitrate data stream is transmitted to all clients. Accordingly, a client that has access to low or fluctuating bandwidth will not be able to view video smoothly (i.e., jerky video) and will often have to wait to receive video data streams, thereby providing a poor user experience. That is, when only a single bitrate data stream is transmitted to multiple clients having access to different bandwidths, video streaming is unreliable.

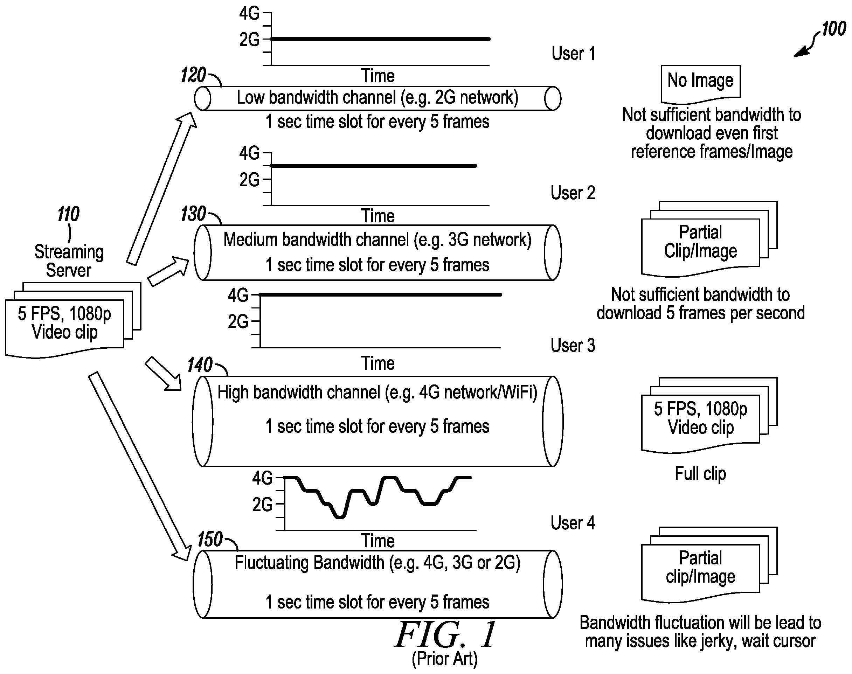

For example, FIG. 1 is a block diagram of a system 100 known in the art. As seen in FIG. 1, a streaming server 110 can host a plurality of video data streams with a single bitrate. However, when the server 110 transmits a video data stream to User 1 on a channel 120 with low bandwidth, User 1 cannot view an image from the video because an insufficient amount of bandwidth if available to download the image. Similarly, when the server 110 transmits a video data stream to User 2 on a channel 130 with medium bandwidth, User 2 must wait for a period of time to render an image from the video due to insufficient bandwidth, and the video may be jerky when it is downloaded. Under ideal circumstances, when the server 110 transmits a video data stream to User 3 on a channel 140 with high bandwidth, User 3 can play the video as desired because a sufficient amount of bandwidth is available. However, when the server 110 transmits a video data stream to User 4 on a channel 150 with fluctuating bandwidth, User 4 cannot download the video as the bandwidth fluctuates to insufficient bandwidth, resulting in jerky or latent video.

In view of the above, there is a continuing, ongoing need for improved systems and methods.

### BRIEF DESCRIPTION OF THE DRAWINGS

FIG. 1 is a block diagram of a system known in the art; and
FIG. 2 is a block diagram of a system using adaptive video streaming in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein can include systems and methods for adaptive streaming using JPEG 2000. For example, systems and methods disclosed herein can leverage JPEG 2000 codec technology to host multilayered images on a server, and a client can download one or more layers of the images based on the bandwidth available to the client at a given point in time. In some embodiments, each of the one or more layers can carry an increasing amount of details of an image.

In accordance with disclosed embodiments, when JPEG 2000 is employed to compress and code video data streams, even a partial image can be decoded and played, for example, by decoding a selected number of layers of the image. Furthermore, when multiple layers of images from a video data stream are stored on a server, the image quality and resolution can improve with each lower layer. Therefore, systems and methods disclosed herein can provide adaptive streaming without the overhead cost of hosting multiple bitrate data streams.

In accordance with disclosed embodiments, a streaming server can receive a video data stream, for example, a high quality video data stream, from a video source and convert the video data stream into multiple layers using JPEG 2000 compression techniques such that each layer can progressively add more image quality and resolution to a previous layer. Then, a client can download one or more layers from the server based on the bandwidth available to the client.

In an exemplary embodiment, a client may want to download 5 frames per second, thereby requiring that the client download each image in 200 msec. If the client has high bandwidth available, then the client can download a high size of content in 200 msec-all or almost all of the layers of a JPEG 2000 image. Therefore, the image quality and resolution of the video downloaded by the client will be high. Furthermore, if the client has low bandwidth available, then the client can download a low size of content in 200 msec-some or less than all of the layers of a JPEG 2000 image. While the image quality and resolution of the video downloaded by the client will be low, the downloaded layers can be decoded and rendered smoothly and without video latency. Further still, if the client has fluctuating bandwidth available, then the client can download less or more layers of a JPEG 2000 image at different time slots of 200 msec based on how much bandwidth is available during each time slot. Accordingly, the image quality and resolution of the video downloaded by the client can vary according to the bandwidth available to the client, but the client will be able to view smooth video without latency.

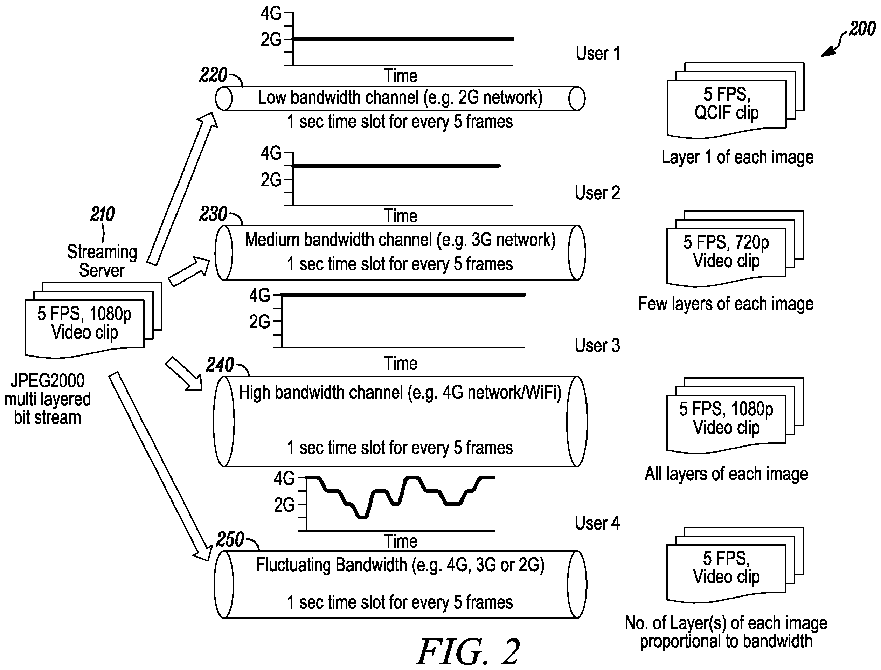

FIG. 2 is a block diagram of a system 200 using adaptive video streaming in accordance with disclosed embodiments. As seen in FIG. 2, a streaming server 210 can host a plurality of video data streams and store those video data streams as JPEG 2000 multilayered bitrate data streams. When User 1 requests video from the server 210 via a low bandwidth channel 220, the server 210 can transmit one layer of each image from the video to User 1 so that User 1 can view the video with low image quality and resolution, for example, in a thumbnail, but User 1 can view the video nonetheless. When User 2 requests video from the server 210 via a medium bandwidth channel 230, the server 210 can transmit some, but not all layers of each image from the video to User 2 so that User 2 can view the video with medium image quality and resolution, but User 2 can view the video smoothly and without latency. When User 3 requests video from the server 210 via a high bandwidth channel 240, the server 210 can transmit all layers of each image from the video to User 3 so that User 3 can view the video with high or maximum image quality and resolution. When User 4 requests video from the server 210 via a fluctuating bandwidth channel 250, the server 210 can transmit a number of layers of each image from the video to User 4 based on the bandwidth available on the channel 250 at any given time. Therefore, User 4 can view smooth video, and the image quality and resolution of the video can vary and be proportional to the fluctuating bandwidth.

As exemplified by the system 200 shown in FIG. 2, in some embodiments, multiple clients in a system can have access to varying bandwidth. However, a server can download different layers, images, or video clips to different clients based on the current available to a respective client. That is, the same layers, images, or video clips downloaded to one client need not be identical to the same layers, images, or video clips downloaded to another client. Accordingly, systems and methods disclosed herein can result in zero video latency so that clients need not wait to download images, so that images are not buffered, and so that whatever image quality and resolution are downloaded within a given period of time can be rendered for smooth viewing thereof irrespective of available bandwidth.

In some embodiments, a client can download a selected number of layers from the server or the server can transmit a selected number of layers to the client based on the bandwidth available to the client at the time the client transmits the request, at the time the server receives the request, or at the time the server transmits the selected number of layers to the client. However, it is to be understood that, in any embodiment, systems and methods disclosed herein need not identify, match, publish, or switch between multiple bitrate data streams hosted on the server, thereby avoiding the need for additional infrastructure on the server.

In some embodiments, systems and methods disclosed herein can be used in connection with mega pixel cameras so that high resolution video clips can be seamlessly streamed to low bandwidth clients. Furthermore, in some embodiments, systems and methods disclosed herein can be used in connection with progressive image clips so that, when a system is in alarm and transmits an image of a URL to a user device, the user can click on the URL to download and display a coarse image of video on the user device that can progressively increase in image quality as bandwidth becomes available. Further still, in some embodiments, systems and methods disclosed can adapt to the resolution of a client's display screen based on the client's request for images, which, in some embodiments, can be based on the screen resolution. For example, when a client's display screen includes a display area with a grid, each window on the grid can have a different resolution, and systems and methods disclosed herein can dynamically provide images with different resolutions based on the window in the grid in which a respective image is to be displayed. However, embodiments disclosed herein are not so limited and can be used in connection with all embodiments disclosed and described herein.

It is to be understood that a server device and a client device as disclosed and described herein can include transceiver device, a user interface device, and a memory device each of which can be in communication with respective control circuitry, one or more programmable processors, and executable control software as would be understood by one of ordinary skill in the art. The executable control software can be stored on a transitory or non-transitory computer readable medium, including, but not limited to local computer memory, RAM, optical storage media, magnetic storage media, flash memory, and the like.

In some embodiments, some or all of the control circuitry, programmable processor, and control software can execute and control at least some of the methods disclosed and described herein. For example, in some embodiments, some or all of the control circuitry, programmable processor, and control software can store a video data stream in multiple layers, can request video from or receive a request for video from a server, and can transmit or receive one or more layers of the video from the server to the client based on the bandwidth available to the client at the time of the request.

Although a few embodiments have been described in detail above, other modifications are possible. For example, the logic flows described above do not require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the spirit and scope of the invention. It is to be understood that no limitation with respect to the specific system or method described herein is intended or should be inferred. It is, of course, intended to cover all such modifications as fall within the spirit and scope of the invention.

Preferred Embodiments of the Present Invention are as numbered below:
1. A method comprising:
   receiving a video data stream from a video source;
   converting the video data stream into a plurality of image layers;
   storing each of the plurality of image layers; and
   transmitting at least one of the plurality of image layers to a client device based on a bandwidth available in a communication channel with the client device.
2. The method of 1 further comprising converting the video data stream into the plurality of image layers using JPEG 2000 compression techniques.
3. The method of 1 further comprising adding image quality and resolution to successive ones of the plurality of image layers.
4. The method of 1 further comprising:
   transmitting more of the plurality of image layers to the client device when the bandwidth available in the communication channel with the client device is at a first level; and
   transmitting less of the plurality of image layers to the client device when the bandwidth available in the communication channel with the client device is at a second level,
   wherein the first level is higher than the second level.
5. The method of 1 further comprising varying a number of the plurality of image layers transmitted to the client device as the bandwidth available in the communication channel with the client device fluctuates.
6. The method of 1 further comprising receiving a request for the video data stream from the client device, wherein a number of the plurality of image layers to transmit to the client device is based on the bandwidth available when the request is transmitted or received.
7. The method of 1 further comprising receiving a request for the video data stream from the device, wherein a number of the plurality of image layers to transmit to the client device is based on the bandwidth available when the at least one of the plurality of image layers is transmitted.
8. The method of 1 further comprising:
   receiving a request for the video data stream from the client device via the communication channel with the client device; and
   responsive to the request, transmitting the at least one of the plurality of image layers to the client device via the communication channel with the client device.
9. A method comprising:
   transmitting a request for a video data stream stored on a server device; and
   receiving at least one of a plurality of image layers corresponding to the video data stream from the server device based on a bandwidth available in a communication channel with the server device.
10. The method of 9 wherein successive ones of the plurality of image layers add image quality and resolution.
11. The method of 9 further comprising:
   receiving more of the plurality of image layers from the server device when the bandwidth available in the communication channel with the server device is at a first level;
   receiving less of the plurality of image layers from the server device when the bandwidth available in the communication channel with the server device is at a second level,
   wherein the first level is higher than the second level.
12. The method of 9 further comprising receiving a varying number of the plurality of image layers from the server device as the bandwidth available in the communication channel with the server device fluctuates.
13. The method of 9 wherein a number of the plurality of image layers to transmit is based on the bandwidth available in the communication channel with the server device when the request is transmitted or received.
14. The method of 9 wherein a number of the plurality of image layers to transmit is based on the bandwidth available in the communication channel with the server device when the at least one of the plurality of image layers is transmitted.
15. A system comprising:
   a video source;
   a server device; and
   a client device in communication with the server device via a communication channel,
   wherein the server device receives a video data stream from a video source,
   wherein the server device converts the video data stream into a plurality of image layers,
   wherein the server device stores each of the plurality of image layers,
   wherein the client device transmits a request for the video data stream to the server device, and
   wherein the server device transmits at least one of the plurality of image layers to the client device based on a bandwidth available in the communication channel with the client device.
16. The system of 15 wherein successive ones of the plurality of image layers add image quality and resolution.
17. The system of 15 wherein the server device transmits more of the plurality of image layers to the client device when the bandwidth available in the communication channel with the client device is at a first level, wherein the server device transmits less of the plurality of image layers to the client device when the bandwidth available in the communication channel with the client device is at a second level, and wherein the first level is higher than the second level.
18. The system of 15 wherein the server device varies a number of the plurality of image layers transmitted to the client device as the bandwidth in the communication channel with the client device fluctuates.
19. The system of 15 wherein a number of the plurality of image layers to transmit to the client device is based on the bandwidth available when the request is transmitted or received.
20. The system of 15 wherein a number of the plurality of image layers to transmit to the client device is based on the bandwidth available when server transmits the at least one of the plurality of images to the client device.

## Claims

1. A method comprising:
receiving a video data stream from a video source;
converting the video data stream into a plurality of image layers;
storing each of the plurality of image layers; and
transmitting at least one of the plurality of image layers to a client device based on a bandwidth available in a communication channel with the client device.

2. The method of claim 1 further comprising converting the video data stream into the plurality of image layers using JPEG 2000 compression techniques.

3. The method of claim 1 further comprising adding image quality and resolution to successive ones of the plurality of image layers.

4. The method of claim 1 further comprising:
transmitting more of the plurality of image layers to the client device when the bandwidth available in the communication channel with the client device is at a first level; and
transmitting less of the plurality of image layers to the client device when the bandwidth available in the communication channel with the client device is at a second level,
wherein the first level is higher than the second level.

5. The method of claim 1 further comprising varying a number of the plurality of image layers transmitted to the client device as the bandwidth available in the communication channel with the client device fluctuates.

6. The method of claim 1 further comprising receiving a request for the video data stream from the client device, wherein a number of the plurality of image layers to transmit to the client device is based on the bandwidth available when the request is transmitted or received.

7. The method of claim 1 further comprising receiving a request for the video data stream from the client device, wherein a number of the plurality of image layers to transmit to the client device is based on the bandwidth available when the at least one of the plurality of image layers is transmitted.

8. The method of claim 1 further comprising:
receiving a request for the video data stream from the client device via the communication channel with the client device; and
responsive to the request, transmitting the at least one of the plurality of image layers to the client device via the communication channel with the client device.

9. A method comprising:
transmitting a request for a video data stream stored on a server device; and
receiving at least one of a plurality of image layers corresponding to the video data stream from the server device based on a bandwidth available in a communication channel with the server device.

10. The method of claim 9 wherein successive ones of the plurality of image layers add image quality and resolution.

11. The method of claim 9 further comprising:
receiving more of the plurality of image layers from the server device when the bandwidth available in the communication channel with the server device is at a first level;
receiving less of the plurality of image layers from the server device when the bandwidth available in the communication channel with the server device is at a second level,
wherein the first level is higher than the second level.

12. The method of claim 9 further comprising receiving a varying number of the plurality of image layers from the server device as the bandwidth available in the communication channel with the server device fluctuates.

13. The method of claim 9 wherein a number of the plurality of image layers to transmit is based on the bandwidth available in the communication channel with the server device when the request is transmitted or received.

14. The method of claim 9 wherein a number of the plurality of image layers to transmit is based on the bandwidth available in the communication channel with the server device when the at least one of the plurality of image layers is transmitted.

15. A system comprising:
a video source;
a server device; and
a client device in communication with the server device via a communication channel,
wherein the server device receives a video data stream from a video source,
wherein the server device converts the video data stream into a plurality of image layers,
wherein the server device stores each of the plurality of image layers,
wherein the client device transmits a request for the video data stream to the server device, and
wherein the server device transmits at least one of the plurality of image layers to the client device based on a bandwidth available in the communication channel with the client device.
